# EUROPEAN PATENT APPLICATION

(11) **EP 2 523 338 A1**
(43) Date of publication of application: **14.11.2012**
(21) Application number: 10841810.4
(22) Date of filing: 05.01.2010
(51) Int. Cl.: H02M 7/06

(54) **AC-DC CONVERTER AND METHOD OF CONTROLLING SAME**

(71) Applicant: Hitachi, Ltd., Chiyoda-ku Tokyo 100-8280 (JP)
(72) Inventor: SHIMADA, Takae, Hitachi-shi Ibaraki 319-1292 (JP); KANOUDA, Akihiko, Hitachi-shi Ibaraki 319-1292 (JP); OKUBO, Toshikazu, Hitachi-shi Ibaraki 319-1292 (JP); HATAKEYAMA, Tomoyuki, Hitachi-shi Ibaraki 319-1292 (JP)
(74) Representative: Beetz & Partner
(86) International application number: PCT/JP2010/000011
(87) International publication number: WO 2011/083503

(57) **Abstract**

To provide an AC-DC converter that is highly efficient in a broad load current range from a light load to a heavy load.

An AC-DC converter 1 has a main circuit and a control means 4; the main circuit includes a diode bridge circuit 3, a main inductor L1, a main switching element S1, a main diode D1, an auxiliary inductor L2, an auxiliary switching element S2, an auxiliary diode D2, and a smoothing capacitor C1 connected to a DC load 12. The AC-DC converter 1 supplies electric power from an AC power supply 11 to the DC load 12. In a period during which the instantaneous value of an input current from the AC power supply 11 is smaller than a prescribed value Ith, the AC-DC converter 1 stops the main switching element S1 and performs electricity conversion in hard switching by the operation of the auxiliary switching element S2.

## Description

### FIELD OF THE INVENTION

The present invention relates to an AC-DC converter that converts AC power to a DC current.

### BACKGROUND OF THE INVENTION

A conventional AC-DC converter, which includes a rectifying circuit and a power factor improving circuit, converts AC power to a DC current: the rectifying circuit is configured with a diode bridge and the power factor improving circuit is configured with a switching element, a smoothing inductor, a diode, and a smoothing capacitor. However, when a switchover is made with a voltage applied to the switching element in the power factor improving circuit, a large switching loss is generated, lowering the efficiency.

In view of the above situation, an AC-DC converter that lowers the switching loss and improves the efficiency is disclosed in non-patent literature (NPL) 1. To reduce the switching loss, the AC-DC converter in NPL 1 has an auxiliary circuit configured with a switching element, a rector, and a diode. The auxiliary circuit achieves zero-voltage switching, by which the switching element of the power factor improving circuit is turned on and off when a voltage applied to the switching element is substantially zero, to reduce the switching loss.

In patent literature (PTL) 1, a step-up/step-down chopper circuit is disclosed in which a PWM control range is large and high efficiency can be achieved even in a region having a low PWM control range. In PTL 1, an operation in a light load current area is carried out by hard switching achieved by turning on and off an auxiliary transistor.

### PROIOR TECHNICAL DOCUMENTS

### PATENT DOCUMENT

PATENT DOCUMENT 1: Japanese Patent Laid-open publication No. 2006-34069

### NON-PATENT DOCUMENT

NON-PATENT DOCUMENT 1: UC2855 Data Sheet - Texas Instruments

### SUMMARY OF THE INVENTION

Since input power to an AC-DC converter is AC power, the input power always pulsates even if load power is constant. The AC-DC converter in NPL 1 suffers from a loss generated when the switching element in the power factor improving circuit operates in a period during which AC input power is small. The loss has been an obstacle to higher efficiency.

Also, when the technology of the step-up/step-down chopper circuit in PTL 1 is expanded to an AC-DC converter, the operation of the switching element in the power factor improving circuit is stopped in the light load current area to suppress the loss. However, since the input power to the AC-DC converter pulsates, there is a period during which the input power is small even in a heavy load current area, and in this period, a loss is generated when the switching element in the power factor improving circuit operates. So still the loss has been an obstacle to higher efficiency.

An object of the present invention is to provide an AC-DC converter that is highly efficient in a broad load current range from a light load to a heavy load.

In an aspect of the present invention, an AC-DC converter is characterized by having a main switching element connected in series with a main inductor so that energy is stored from an AC power supply into the main inductor, a smoothing capacitor connected in parallel to a DC load, a main diode connected from the series connection point of the main inductor and the main switching element toward the positive pole of the smoothing capacitor, a back-to-back connected diode and a snubber capacitor that are connected in parallel to the main switching element, a series circuit configured with an auxiliary inductor and an auxiliary switching element and connected between both ends of the main switching element, an auxiliary diode connected from the series connection point of the auxiliary inductor and the auxiliary switching element toward the positive pole of the smoothing capacitor, and a control means that controls the main switching element and the auxiliary switching element, the control means having power factor improving control by which an input current that flows from the AC power supply is controlled to a sine waveform having substantially the same phase as a power supply voltage, and electric power being supplied from the AC power supply to the DC load; the control means performs control in a soft switching mode, in which the auxiliary switching element is turned on in a period from when the main switching element is turned off until it is turned on, in a period that appears at an intermediate point in each half-cycle of the AC power supply and during which the input current sensed by the current sensor has a prescribed value or more under at least a prescribed load, and also performs control in a hard switching mode, in which the switching operation of the main switching element is stopped and the auxiliary switching element is switched, in a period during which the input current has a prescribed value or less.

According to a preferable embodiment of the present invention, an AC-DC converter that is highly efficient in a broad load current range from a light load to a heavy load can be provided.

Other objects of the present invention will be clarified in embodiments described below.

### BRIEF DESCRIPTION OF THE DRAWINGS

FIG. 1 shows the structure of an AC-DC converter in Example 1 of the present invention.
FIG. 2 illustrates an operation mode under a medium load and a heavy load in Example 1.
FIG. 3 illustrates an operation mode under a light load in Example 1.
FIG. 4 illustrates a method of determining a threshold Ith in Example 1.
FIG. 5A is a circuit diagram used to explain an operation in mode A in a soft switching mode M1 of the AC-DC converter 1.
FIG. 5B is a circuit diagram used to explain an operation in mode B in the switching mode M1.
FIG. 5C is a circuit diagram used to explain an operation in mode C in the switching mode M1.
FIG. 5D is a circuit diagram used to explain an operation in mode D in the switching mode M1.
FIG. 5E is a circuit diagram used to explain an operation in mode E in the switching mode M1.
FIG. 5F is a circuit diagram used to explain an operation in mode F in the switching mode M1.
FIG. 5G is a circuit diagram used to explain an operation in mode G in the switching mode M1.
FIG. 5H is a circuit diagram used to explain an operation in mode H in the switching mode M1.
FIG. 6A is a circuit diagram used to explain an operation in mode A in a hard switching mode M2 of the AC-DC converter 1.
FIG. 6B is a circuit diagram used to explain an operation in mode B in the switching mode M2.
FIG. 6C is a circuit diagram used to explain an operation in mode C in the switching mode M2.
FIG. 6D is a circuit diagram used to explain an operation in mode D in the switching mode M2.
FIG. 6E is a circuit diagram used to explain an operation in mode E in the switching mode M2.
FIG. 6F is a circuit diagram used to explain an operation in mode F in the switching mode M2.
FIG. 7 shows the structure of an AC-DC converter in Example 2 of the present invention.
FIG. 8 schematically illustrates the structure of a power supply system of an electric vehicle in which the AC-DC converter in the present invention is used.

### DESCRIPTION OF THE PREFERRED EMBODIMENTS

Embodiments of the present invention will be described in detail with reference to the drawings. In the descriptions below, a voltage almost equal to or less than the voltage of a switching element in a turned-on state or a voltage drop of a diode in the forward direction is assumed to be zero.

### EMBODIMENT 1

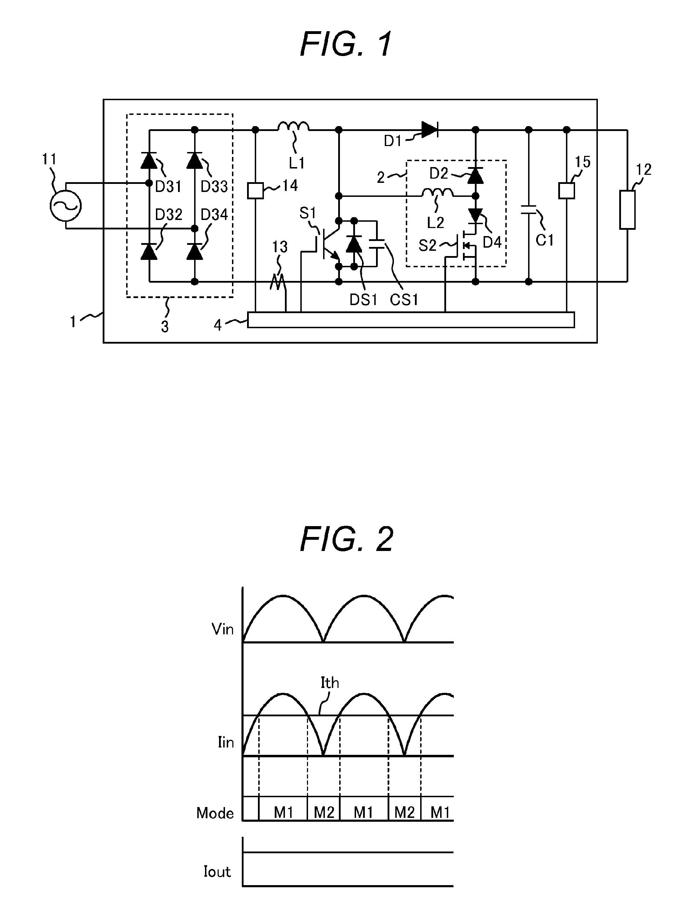

FIG. 1 shows the structure of an AC-DC converter 1 in Example 1 of the present invention. The AC-DC converter 1 supplies electric power from an AC power supply 11 to a DC load 12. The AC-DC converter 1 has power factor improving control by which the power factor of input electric power supplied from the AC power supply 11 is brought close to 1.

In FIG. 1, the AC power supply 11 is connected between the AC terminals of a diode bridge circuit 3 in which rectifying diodes D31 to D34 are bridge-connected. The DC load 12 is connected in parallel to a smoothing capacitor C1.

A main inductor L1 and a main switching element S1 are connected in series between the DC terminals of the diode bridge circuit 3; when the main switching element S1 is turned on, the energy of the AC power supply 11 is stored in the main inductor L1. To release the energy stored in the main inductor L1 to the smoothing capacitor C1 when the main switching element S1 is turned off, a main diode D1 is connected from the series connection point of the main inductor L1 and the main switching element S1 toward the positive pole of the smoothing capacitor C1.

A series circuit configured with an auxiliary inductor L2 and an auxiliary switching element S2 is connected between both ends of the main switching element S1; when the auxiliary switching element S2 is turned on, the energy of the AC power supply 11 is stored in the main inductor L1 and auxiliary inductor L2. To release the energy stored in the main inductor L1 and auxiliary inductor L2 to the smoothing capacitor C1 when the auxiliary switching element S2 is turned off, an auxiliary diode D2 is connected from the series connection point of the auxiliary inductor L2 and the auxiliary switching element S2 toward the positive pole of the smoothing capacitor C1. D4 is a backflow preventing diode.

A back-to-back connected diode DS1 and a snubber capacitor CS1 are connected to the main switching element S1. When a MOSFET is used as the main switching element S1, a parasitic diode of the MOSFET can be used as the back-to-back connected diode DS1. The snubber capacitor CS1 may be omitted depending on the parasitic capacitance of the main switching element S1.

The series circuit configured with the auxiliary inductor L2 and the auxiliary switching element S2 is connected between both ends of the main switching element S1, as described above. The auxiliary diode D2 is connected from the series connection point of the auxiliary inductor L2 and the auxiliary switching element S2 toward the positive pole of the smoothing capacitor C1.

In this circuit structure, a control means 4 is provided that controls the main switching element S1 and auxiliary switching element S2. A current sensor 13 that senses an input current from the AC power supply 11 and a voltage sensor 14 that senses an input voltage, and a voltage sensor 15 that senses an output voltage are connected to the control means 4.

The AC-DC converter in Example 1 has a feature that switches an operation mode according to the value of the input current from the AC power supply 11.

A switchover of an operation mode will be described with reference to FIGs. 2 to 4.

FIG. 2 illustrates an operation mode under a medium load and a heavy load. In FIG. 2, Vin indicates the value of the input voltage sensed by the voltage sensor 14. Iin indicates the value of the input current sensed by the current sensor 13; as a result of power factor improving control, the input current has a phase and waveform similar to those of the voltage Vin. Ith is a current threshold in operation mode switching. Iout is an output current that flows to the load 12.

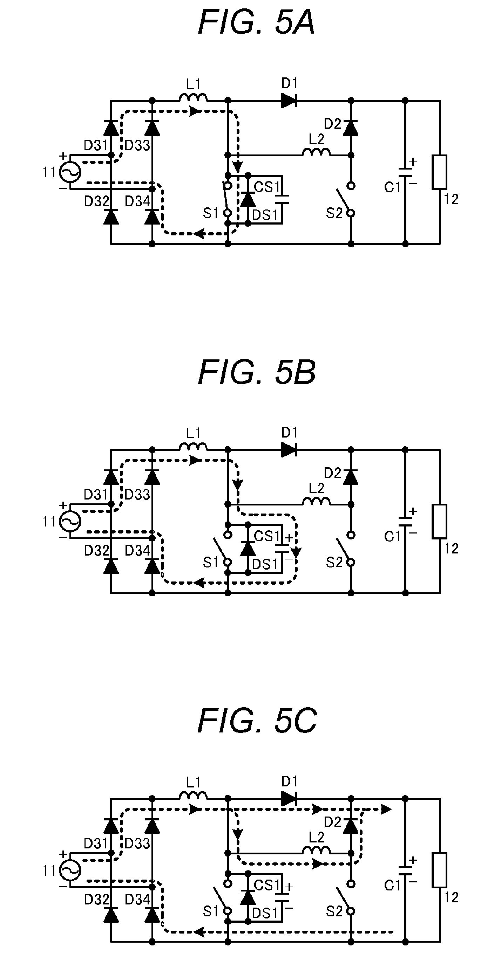

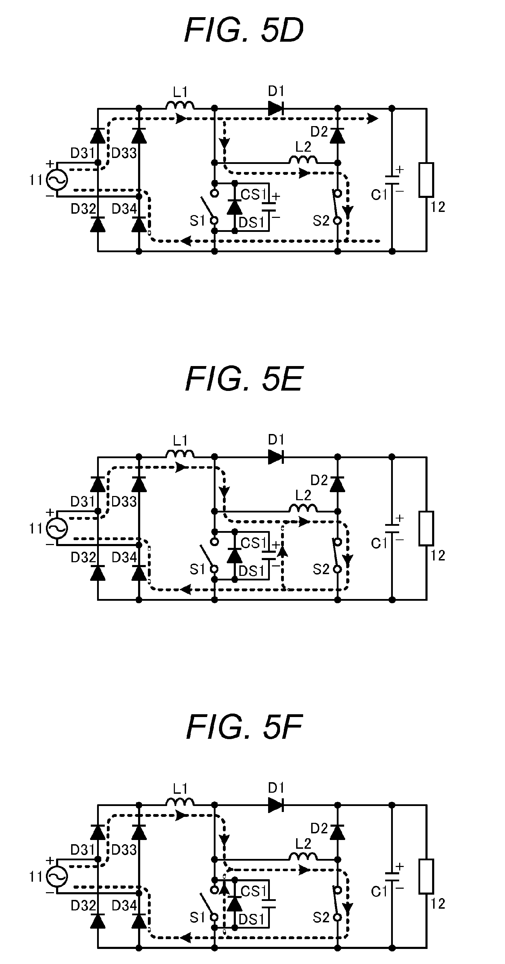

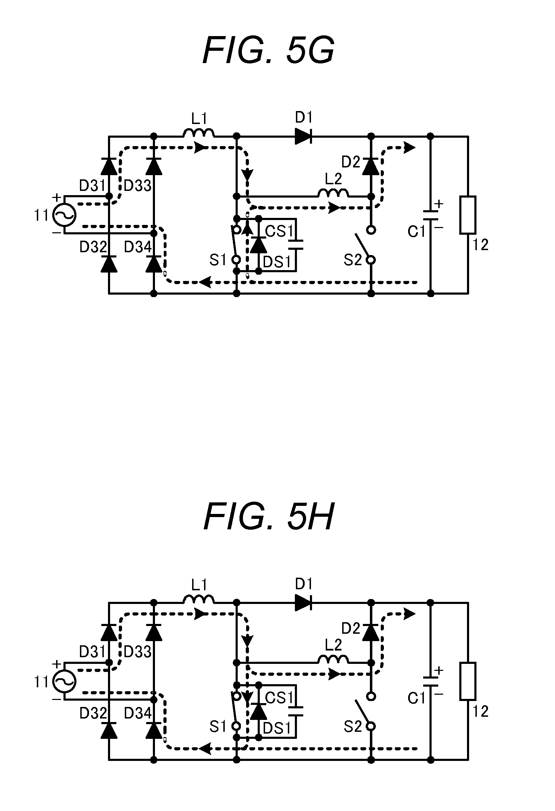

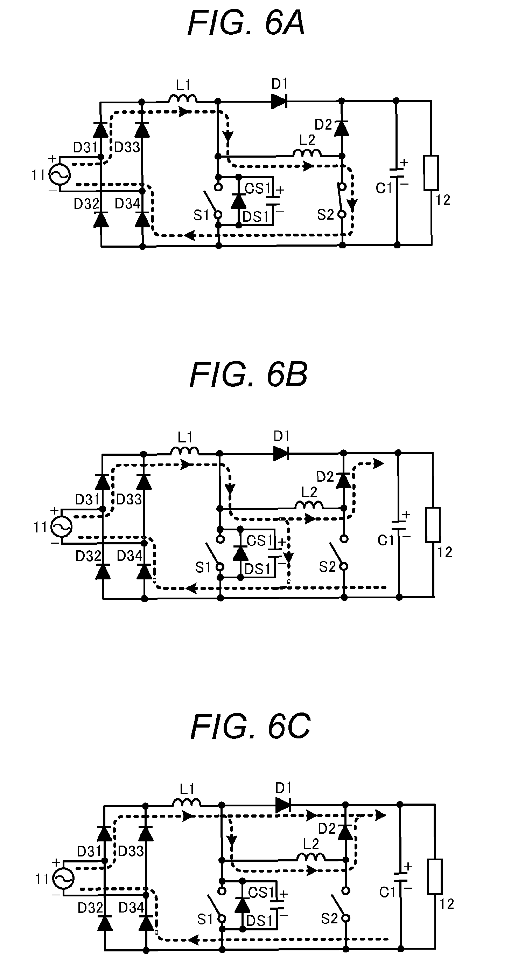

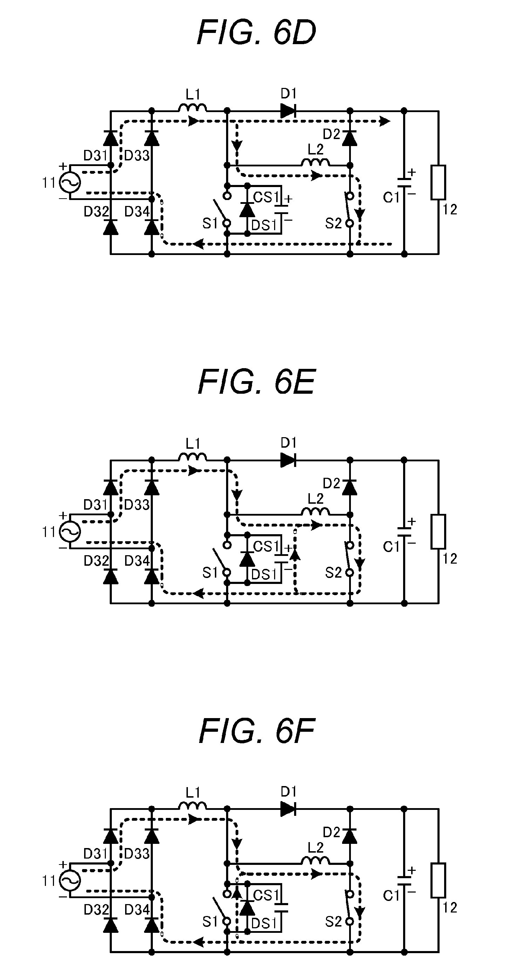

As described above, under a medium load and a heavy load, the AC-DC converter operates in a soft switching mode M1 in a period during which the input current Iin is larger than the threshold Ith and operates in a hard switching mode M2 in a period during which the input current Iin is smaller than the threshold Ith. The soft switching mode M1 and hard switching mode M2 will be described later with reference to FIGs. 5A to 5H and 6A to 6F.

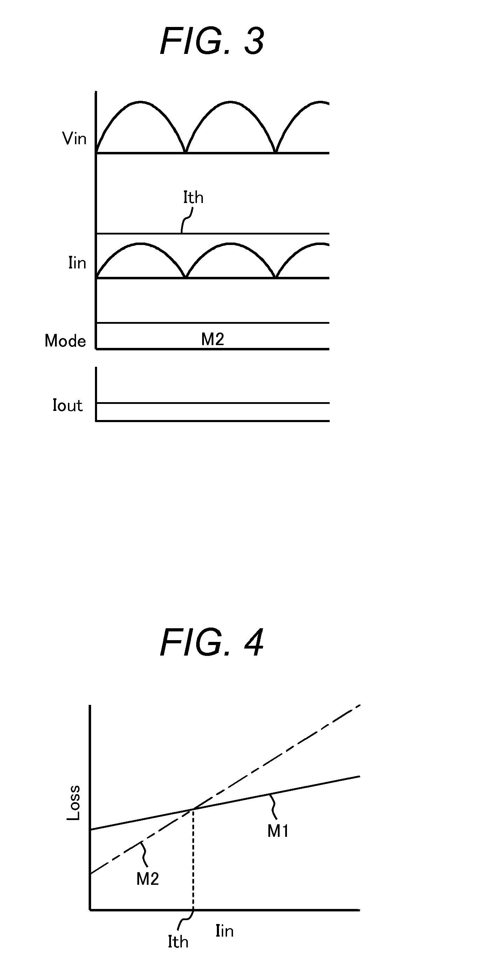

FIG. 3 illustrates an operation mode under a light load. The definitions of Vin, Iin, Ith, and Iout in FIG. 3 are the same as in FIG. 2.

Under a light load in which the output current Iout flowing into the DC load 12 is small and a peak value of the input current Iin is smaller than the threshold Ith, there is no period during which the AC-DC converter operates in the soft switching mode M1 and it operates only in the hard switching mode M2, as illustrated in FIG. 3.

Thus, with the AC-DC converter in this embodiment, there is always a period during which the AC-DC converter operates in the hard switching mode M2 regardless of whether the load current is large (FIG. 2) or small (FIG. 3).

FIG. 4 illustrates a method of determining a threshold Ith. Loss in FIG. 4 indicates a loss caused when the AC-DC converter is operated in the soft switching mode M1 and a loss caused when the AC-DC converter is operated in the hard switching mode M2. As illustrated in FIG. 4, the threshold Ith can be determined so that the operation mode M2 or M1 is selected, whichever brings a smaller loss, depending on the value of the current Iin.

There may be a case in which when the value of the current Iin is almost the same as the threshold Ith, the operation mode frequently switches between the soft switching mode M1 and the hard switching mode M2. This problem may be solved by setting a threshold for switching from the soft switching mode M1 to the hard switching mode M2 and a threshold for switching the hard switching mode M2 to the soft switching mode M1 to values different from each other. That is, as well known when control is switched depending on whether a value is equal to or more than a limit or is equal to or less than the limit, frequent switching (hatching) can be prevented by setting to-and-fro limits to different values to provide so-called hysteresis characteristics.

Of course, the threshold Ith may be changed depending on the voltage of the AC power supply 11. For example, an appropriate value of the threshold may differ depending on whether the AC-DC converter is connected to a 100-VAC power supply or is connected to a 200-VAC power supply. In this case, thresholds Ith may be determined for these AC voltages and may be selectively used.

Next, circuit operations in the operation modes M1 and M2 will be described with reference to FIGs. 5A to 5H and 6A to 6F. The description below will focus only on one pole of the voltage of the AC power supply 11. Operations for the other pole of the voltage of the AC power supply 11 can be easily presumed.

### (Soft switching mode M1)

FIGs. 5A to 5H each illustrate an operation in the soft switching mode M1 of the AC-DC converter 1, representing modes A to H, respectively.

### (Mode A)

In a mode A, the main switching element S1 is in a turned-on state and the auxiliary switching element S2 is turned-off state. The voltage of the AC power supply 11 is applied to the main inductor L1 and the energy of the AC power supply 11 is stored in the main inductor L1.

### (Mode B)

When the main switching element S1 is turned off, the current of the main inductor L1 charges the snubber capacitor CS1 and the voltages of the snubber capacitor CS1 and main switching element S1 are increased.

### (Mode C)

When the voltage of the snubber capacitor CS1 exceeds the voltage of the smoothing capacitor C1, that is, the output voltage, the main diode D1 is brought into conduction and the energy of the AC power supply 11 and main inductor L1 is thereby supplied to the output side. At that time, a current may flow into the auxiliary inductor L2 and auxiliary diode D2 as well.

### (Mode D)

When the auxiliary switching element S2 is turned on, the output voltage is applied to the auxiliary inductor L2. As the current of the auxiliary inductor L2 is increased, the current of the main diode D1 is decreased.

### (Mode E)

When the current of the main diode D1 reaches zero, the snubber capacitor CS1 starts discharging. The current of the main inductor L1 and the discharged current of the snubber capacitor CS1 flow into the auxiliary inductor L2. The voltage of the snubber capacitor CS1 is decreased.

### (Mode F)

When the voltage of the snubber capacitor CS1 reaches zero, the back-to-back connected diode DS1 is brought into conduction. The current of the main inductor L1 and the current of the back-to-back connected diode DS1 thereby flow into the auxiliary inductor L2. At that time, the voltage of the main switching element S1 is kept at zero.

### (Mode G)

The main switching element S1 is turned on. Since the main switching element S1 is turned on with its voltage being zero, the turning on of the main switching element S1 is soft switching. When the auxiliary switching element S2 is turned off, the current of the auxiliary inductor L2 is supplied through the auxiliary diode D2 to the output side. The output voltage is applied to the auxiliary inductor L2. As the current of the auxiliary inductor L2 is decreased, the current of the back-to-back connected diode DS1 is also decreased.

### (Mode H)

When the current of the back-to-back connected diode DS1 reaches zero, a current starts to flow into the main switching element S1. As the current of the auxiliary inductor L2 is decreased, the current of the main switching element S1 is increased.

When the current of the auxiliary inductor L2 then reaches zero, the auxiliary diode D2 is reversely recovered and the operation mode returns to mode A. At that time, the current of the auxiliary inductor L2, which has been stored by reverse conduction of the auxiliary diode D2, may cause a reverse current to flow into the auxiliary switching element S2. To prevent this reverse current, the backflow preventing diode D4 is inserted in series with the auxiliary switching element S2.

### (Hard switching mode M2)

FIGs. 6A to 6F each illustrate an operation in the hard switching mode M2 of the AC-DC converter 1, representing modes A to F, respectively. In the hard switching mode M2, the main switching element S1 remains turned off.

### (Mode A)

In a mode A, the auxiliary switching element S2 is in a turned-on state. The voltage of the AC power supply 11 is applied to the main inductor L1 and auxiliary inductor L2, and the energy of the AC power supply 11 is stored in the inductors L1 and L2. The snubber capacitor CS1 has been charged with a voltage, which is determined by a division ratio of the inductors L1 and L2.

### (Mode B)

When the auxiliary switching element S2 is turned off, the current of the auxiliary inductor L2 flows to the output side and is decreased. The current of the main inductor L1 charges the snubber capacitor CS1 and the voltage of the snubber capacitor CS1 is increased.

### (Mode C)

Same as the mode C in the soft switching mode M1.

### (Mode D)

Same as the mode D in the soft switching mode M1.

### (Mode E)

Same as the mode E in the soft switching mode M1.

### (Mode F)

When the voltage of the snubber capacitor CS1 reaches zero, the back-to-back connected diode DS1 is brought into conduction. The current of the main inductor L1 and the current of the back-to-back connected diode DS1 flow into the auxiliary inductor L2. At that time, since the voltage of the auxiliary inductor L2 is zero, the current of the auxiliary inductor L2 is maintained. Since the voltage of the AC power supply 11 has been applied to the main inductor L1, however, the current of the main inductor L1 is increased. Therefore, the current of the back-to-back connected diode DS1 is decreased.

When the current of the back-to-back connected diode DS1 then reaches zero, the operation mode returns to mode A.

As described above, under a medium load and a heavy load, a current flows into the main switching element S1 and main diode D1 when energy is stored in and released from the main inductor L1. Therefore, elements having a low on-resistance or low on-voltage, such as IGBTs, are suitable to the main switching element S1, and elements having a low forward voltage drop, such as silicon PN junction diodes, are suitable to the main diode D1.

The auxiliary switching element S2 and auxiliary diode D2 both perform a hard switching operation in the operation modes M1 and M2. Therefore, elements having fast switching characteristics, such as MOSFETs, are suitable to the auxiliary switching element S2, and elements having fast reverse recovery characteristics, such as SiC Schottky barrier diodes, are suitable to the auxiliary diode D2.

In this embodiment, a DC voltage is input from the AC power supply 11 through the bridge diode rectifying circuit 3.

The structure has a diode bridge circuit in which the first to fourth rectifying diodes D31 to D34 are bridge-connected and the AC power supply 11 is connected to the AC terminals. The main inductor L1 and main switching element S1 are connected in series between the DC terminals of the diode bridge circuit 3, and the auxiliary inductor L2 and auxiliary switching element S2 are connected in series between both ends of the main switching element S1.

So far, the representation is as described above. However, the description can also be represented as follows. The main diode D1 and smoothing capacitor C1 are connected in series between both ends of the main switching element S1, and the auxiliary diode D2 is connected between the connection point of the auxiliary inductor L2 and auxiliary switching element S2 and the connection point of the main diode D1 and smoothing capacitor C1.

Furthermore, the main circuit structure in this embodiment can also be represented as follows.

In the AC-DC converter, the main switching element S1, the auxiliary switching element S2, and one end of the smoothing capacitor C1 are connected to the anode side of the DC terminals of the diode bridge circuit 3, the main inductor L1 is connected to the cathode side of the DC terminals of the diode bridge circuit 3, the anode of the main diode D1 and the auxiliary inductor L2 are connected to the connection point of the main inductor L1 and main switching element S1, the anode of the auxiliary diode D2 is connected to the connection point of the auxiliary inductor L2 and auxiliary switching element S2, and the cathode of the main diode D1 and the cathode of the auxiliary diode D2 are connected to another end of the smoothing capacitor C1.

As described above, under a medium load and a heavy load, a current flows into the main switching element S1 and main diode D1 when energy is stored in and released from the main inductor L1. Therefore, elements having a low on-resistance or low on-voltage, such as IGBTs, are suitable to the main switching element S1, and elements having a low forward voltage drop, such as silicon PN junction diodes, are suitable to the main diode D1.

The auxiliary switching element S2 and auxiliary diode D2 both perform a hard switching operation in the operation modes M1 and M2. Therefore, MOSFETs and other elements having fast switching characteristics are suitable to the auxiliary switching element S2, and SiC Schottky barrier diodes and other elements having fast reverse recovery characteristics are suitable to the auxiliary diode D2.

Of course, even if elements of the same type are used as the main switching element S1 and auxiliary switching element S2 and as the main diode D1 and auxiliary diode D2, the advantageous effects of the present invention can be obtained.

### EMBODIMENT 2

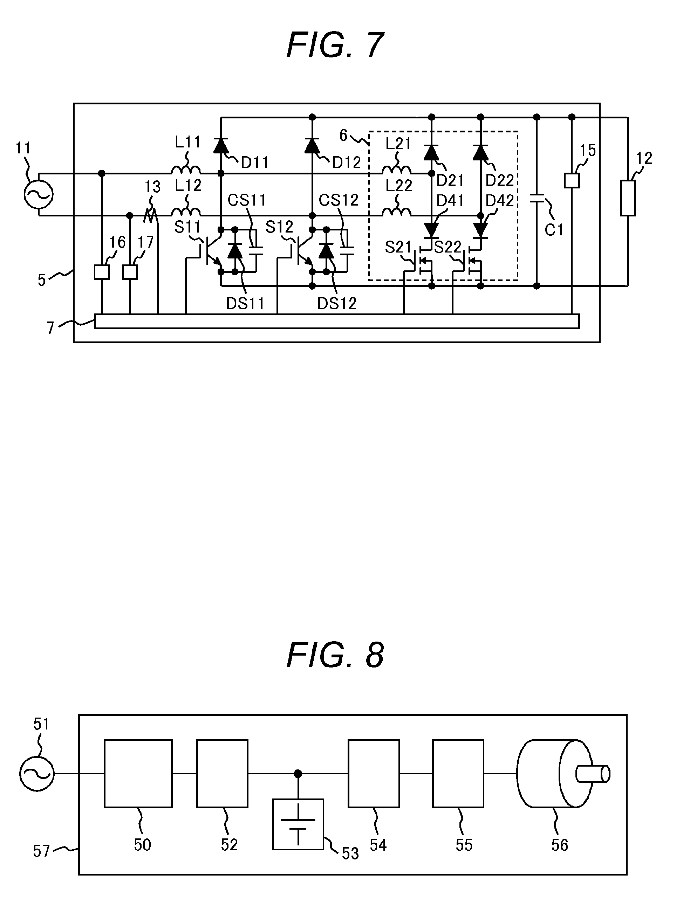

FIG. 7 shows the structure of an AC-DC converter 5 in Example 2 of the present invention. The AC-DC converter 5 supplies electric power from the AC power supply 11 to the DC load 12. The AC-DC converter 5 has power factor improving control by which the power factor of input electric power supplied from the AC power supply 11 is brought close to 1.

In FIG. 7, a main diode D11 and a main switching element S11 are connected in series between both ends of the smoothing capacitor C1, a main diode D12 and a main switching element S12 are connected in series between both ends of the smoothing capacitor C1, an auxiliary diode D21 and an auxiliary switching element S21 are connected in series, and an auxiliary diode auxiliary diode D22 and an auxiliary switching element S22 are connected in series. The cathodes of the diodes D11, D12, D21, and D22 are mutually connected.

An auxiliary inductor L21 is connected between the connection point of the main diode D11 and main switching element S11 and the connection point of the auxiliary diode D21 and auxiliary switching element S21. An auxiliary inductor L22 is connected between the connection point of the main diode D12 and main switching element S12 and the connection point of the auxiliary diode D22 and auxiliary switching element S22.

The AC power supply 11 is connected between the connection point of the main diode D11 and main switching element S11 and the connection point of the main diode D12 and main switching element S12 with the main inductors L11 and L12 interposed therebetween. The DC load 12 is connected in parallel to the smoothing capacitor C1.

A back-to-back connected diode DS11 and a snubber capacitor CS11 are connected to the main switching element S11, and a back-to-back connected diode DS12 and a snubber capacitor CS12 are connected to the main switching element S12. When MOSFETs are used as the main switching elements S11 and S12, parasitic diodes of the MOSFETs can be used as the back-to-back connected diodes DS11 and DS12. The snubber capacitors CS11 and CS12 may be omitted depending on the parasitic capacitances of the main switching elements S11 and S12. D41 and D42 are backflow preventing diodes.

The main switching elements S11 and S12 and the auxiliary switching elements S21 and S22 are controlled by a control means 7. The current sensor 13, which senses the input current from the AC power supply 11, voltage sensors 16 and 17 that detect the input voltage, and the voltage sensor 15, which senses the output voltage, are connected to the control means 7.

The AC-DC converter 5 switches between its operation modes M1 and M2 in the same way as the AC-DC converter 1 in Example 1.

The circuit operation is the same as with the AC-DC converter 1 in Example 1 except that when the voltage of the AC power supply 11 is positive for the main switching element S11, a switchover is made between the main switching element S11 and the auxiliary switching element S21 and when the voltage of the AC power supply 11 is positive for the main switching element S12, a switchover is made between the main switching element S12 and the auxiliary switching element S22.

The embodiments of the present invention indicated in FIGs. 1 and 7 have a common structure described below.

In the AC-DC converter 1 (5) that includes the main switching element S1 (S11, S12) connected in series with the main inductor L1 (L11, L12) so that energy is stored from the AC power supply 11 into the main inductor, the smoothing capacitor C1 connected in parallel to the DC load 12, the back-to-back connected diode DS1 (DS11, DS12) and snubber capacitor CS1 (CS11, CS12) that are connected in parallel to the main switching element S1 (S11, S12), the main diode D1 (D11, D12) connected from the series connection point of the main inductor L1 (L11, L12) and the main switching element S1 (S11, S12) toward the positive pole of the smoothing capacitor C1 so that the energy of the main inductor L1 (L11, L12) is released to the smoothing capacitor C1, a series circuit configured with the auxiliary inductor L2 (L21, L22) and auxiliary switching element S2 (S21, S22) and connected between both ends of the main switching element S1 (S11, S12), the auxiliary diode D2 (D21 and D22) connected from the series connection point of the auxiliary inductor L2 (L21, L22) and the auxiliary switching element S2 (S21, S22) toward the positive pole of the smoothing capacitor C1, and the control means 4 (7) that controls the main switching element S1 (S11, S12) and the auxiliary switching element, the control means 4 (7) having power factor improving control by which an input current that flows from the AC power supply 11 is controlled to a sine waveform, electric power being supplied from the AC power supply 11 to the DC load 12; the control means 4 (7) is structured so that it operates in the soft switching mode M1, in which the auxiliary switching element S2 (S21, S22) is turned on in a period from when the main switching element S1 (S11, S12) is turned off until it is turned on in a period, in which the input current Iin has a prescribed value Ith or more, and also operates in the hard switching mode M2, in which the switching operation of the main switching element S1 (S11, S12) is stopped and the auxiliary switching element S2 (S21, S22) is switched, in a period in which the input current Iin has the prescribed value Ith or less.

The main circuit structure in Example 2 in FIG. 7 can also be represented as follows.

In the AC-DC converter, the main inductor L1 has a first main inductor L1 and a second main inductor L2, the auxiliary inductor L2 has a first auxiliary inductor L21 and a second auxiliary inductor L22, the main diode D1 has a first main diode D11 and a second main diode D12, which are connected to one end of the smoothing capacitor C1, the auxiliary diode D2 has a first auxiliary diode D21 and a second auxiliary diode D22, which are connected to the one end of the smoothing capacitor C1, the main switching element S1 has a first main switching element S11, one end of which is connected to the other end of the smoothing capacitor C1 and the other end of which is connected to the anode of the first main diode D11 and also has a second main switching element S12, one end of which is connected to the other end of the smoothing capacitor C1 and the other end of which is connected to the anode of the second main diode D12, the auxiliary switching element S2 has a first auxiliary switching element S21, one end of which is connected to the other end of the smoothing capacitor C1 and the other end of which is connected to the anode of the first auxiliary diode D21 and also has a second auxiliary switching element S22, one end of which is connected to the other end of the smoothing capacitor C1 and the other end of which is connected to the anode of the second auxiliary diode D22, the back-to-back connected diode DS1 and snubber capacitor CS1 have a first back-to-back connected diode DS11 and a first snubber capacitor CS11, which are connected in parallel to the first main switching element S11, and also have a second back-to-back connected diode DS12 and a second snubber capacitor CS12, which are connected in parallel to the second main switching element S12, the first auxiliary inductor L21 is connected between the anode of the first main diode D11 and the anode of the first auxiliary diode D21, the second auxiliary inductor L22 is connected between the anode of the second main diode D12 and the anode of the second auxiliary diode D22, and the AC power supply 11 is connected between the anode of the first main diode D11 and the anode of the second main diode D12 with the first main inductor L11 and second main inductor L12 interposed therebetween.

### EMBODIMENT 3

FIG. 8 schematically illustrates the structure of a power supply system of an electric vehicle 57 in which the AC-DC converter in the present invention is used. A DC-DC converter 54 is connected to a battery 53, the DC-DC converter 54 supplying electric power to an inverter 55 that drives a motor 56. An AC-DC converter 50 in the present invention, which is connected to an AC power supply 51 and to a DC-DC converter 52 that charges the battery 53, converts the electric power of the AC power supply 51 to a DC current and supplies the converted DC current to the DC-DC converter 52.

According to Example 4, when the AC-DC converter 50 in the present invention is used, the battery 53 can be highly efficiently charged from a commercial power supply in a wide range from states under a medium load and heavy load at the initial state of charging to a state under a light load at the last stage of charging. Of course, the AC-DC converter 50 in the present invention can also be applied to a hybrid vehicle.

### REFERENCE SIGNS LIST

1, 5, 50 ... AC-DC converter; 2, 6 ... auxiliary circuit; 3 ... diode bridge circuit; 4, 7 ... control means; 11, 51 ... AC power supply; 12 ... DC load; 13 ... current sensor; 14 to 17 ... voltage sensor; 52, 54 ... DC-DC converter; 53 ... battery; 55 ... inverter; 56 ... motor; 57 ... electric vehicle; D1, D11, D12 ... main diode; D2, D21, D22 ... auxiliary diode; D31 to D34 ... rectifying diodes; D4, D41, D42 ... backflow preventing diode; C1 ... smoothing capacitor; L1, L11, L12 ... main inductor; L2, L21, L22 ... auxiliary inductor; S1, S11, S12 ... main switching element; S2, S21, S22 ... auxiliary switching element; DS1, DS11, DS12 ... back-to-back connected diode; CS1, CS11, CS12 ... snubber capacitor.

## Claims

1. An AC-DC converter that has a main switching element connected in series with a main inductor so that energy is stored from an AC power supply into the main inductor, a smoothing capacitor connected in parallel to a DC load, a main diode connected from a series connection point of the main inductor and the main switching element toward a positive pole of the smoothing capacitor, a back-to-back connected diode and a snubber capacitor that are connected in parallel to the main switching element, a series circuit configured with an auxiliary inductor and an auxiliary switching element and connected between both ends of the main switching element, an auxiliary diode connected from a series connection point of the auxiliary inductor and the auxiliary switching element toward the positive pole of the smoothing capacitor, and a control means that controls the main switching element and the auxiliary switching element, the control means having power factor improving control by which an input current that flows from the AC power supply is controlled to a sine waveform having substantially the same phase as a power supply voltage, electric power being supplied from the AC power supply to the DC load, wherein:
the control means performs control in a soft switching mode, in which the auxiliary switching element is turned on in a period from when the main switching element is turned off until the main switching element is turned on, in a period that appears at an intermediate point in each half-cycle of the AC power supply and during which the input current sensed by the current sensor has a prescribed value or more under at least a prescribed load; and
the control means also performs control in a hard switching mode, in which a switching operation of the main switching element is stopped and the auxiliary switching element is switched, in a period during which the input current has a prescribed value or less.

2. The AC-DC converter according to Claim 1, wherein a diode bridge circuit is provided in which first to fourth rectifying diodes are bridge-connected and the AC power supply is connected to AC terminals; a series circuit configured with the main inductor and the main switching element is connected between DC terminals of the diode bridge circuit; a series circuit configured with the auxiliary inductor and the auxiliary switching element is connected between both ends of the main switching element; and the auxiliary diode is connected between the series connection point of the auxiliary inductor and the auxiliary switching element and a connection point of the main diode and the smoothing capacitor.

3. The AC-DC converter according to Claim 2, wherein the main switching element, the auxiliary switching element, and one end of the smoothing capacitor are connected to an anode side of the DC terminals of the diode bridge circuit; the main inductor is connected to a cathode side of the DC terminals of the diode bridge circuit; an anode of the main diode and the auxiliary inductor are connected to the connection point of the main inductor and the main switching element; an anode of the auxiliary diode is connected to the connection point of the auxiliary inductor and the auxiliary switching element; and a cathode of the main diode and the cathode of the auxiliary diode are connected to another end of the smoothing capacitor.

4. The AC-DC converter according to Claim 1, wherein the main inductor has a first main inductor and a second main inductor; the auxiliary inductor has a first auxiliary inductor and a second auxiliary inductor; the main diode has a first main diode and a second main diode; the first main diode and the second main diode each have a cathode connected to one end of the smoothing capacitor; the auxiliary diode has a first auxiliary diode and a second auxiliary diode; the first auxiliary diode and the second auxiliary diode each have a cathode connected to the one end of the smoothing capacitor; the main switching element has a first main switching element, one end of which is connected to another end of the smoothing capacitor and another end of which is connected to an anode of the first main diode and also has a second main switching element, one end of which is connected to the other end of the smoothing capacitor and another end of which is connected to an anode of the second main diode; the auxiliary switching element has a first auxiliary switching element, one end of which is connected to the other end of the smoothing capacitor and another end of which is connected to an anode of the first auxiliary diode and also has a second auxiliary switching element, one end of which is connected to the other end of the smoothing capacitor and another end of which is connected to an anode of the second auxiliary diode; the back-to-back connected diode and snubber capacitor have a first back-to-back connected diode and a first snubber capacitor, which are connected in parallel to the first main switching element, and also have a second back-to-back connected diode and a second snubber capacitor, which are connected in parallel to the second main switching element; the first auxiliary inductor is connected between the anode of the first main diode and the anode of the first auxiliary diode; the second auxiliary inductor is connected between the anode of the second main diode and the anode of the second auxiliary diode; and the AC power supply is connected between the anode of the first main diode and the anode of the second main diode with the first main inductor and second main inductor interposed therebetween.

5. The AC-DC converter according to any one of Claims 1 to 4, wherein a current sensor is inserted in series with the main inductor to sense the input current.

6. The AC-DC converter according to any one of Claims 1 to 5, wherein a backflow preventing diode is inserted in series with the auxiliary switching element or the auxiliary inductor.

7. The AC-DC converter according to any one of Claims 1 to 6, wherein the auxiliary diode is formed with an element that has faster reverse recovery characteristics than the main diode.

8. The AC-DC converter according to any one of Claims 1 to 7, wherein the auxiliary switching element is formed with an element that has faster switching characteristics than the main switching element.

9. The AC-DC converter according to any one of Claims 1 to 8, wherein the main diode is formed with a silicon PN junction diode and the auxiliary diode is formed with a SiC Schottky barrier diode.

10. The AC-DC converter according to any one of Claims 1 to 9, wherein the main switching element is formed with an IGBT and the auxiliary switching element is formed with a MOSFET.

11. The AC-DC converter according to any one of Claims 1 to 10, wherein when a value of the input current is equal to or smaller than a first prescribed value, PWM control is performed in the hard switching mode, and when the value of the input current is equal to or larger than a second prescribed value that is larger than the first prescribed value, PWM control is performed in the soft switching mode.

12. A method of controlling an AC-DC converter that has a main switching element connected in series with a main inductor so that energy is stored from an AC power supply into the main inductor, a smoothing capacitor connected in parallel to a DC load, a main diode connected from a series connection point of the main inductor and the main switching element toward a positive pole of the smoothing capacitor, a back-to-back connected diode and a snubber capacitor that are connected in parallel to the main switching element, a series circuit configured with an auxiliary inductor and an auxiliary switching element and connected between both ends of the main switching element, an auxiliary diode connected from a series connection point of the auxiliary inductor and the auxiliary switching element toward the positive pole of the smoothing capacitor, and a control means that controls the main switching element and the auxiliary switching element, the method including a power factor improving control step of controlling an input current that flows from the AC power supply to a sine waveform having substantially the same phase as a power supply voltage, electric power being supplied from the AC power supply to the DC load, the method comprising the steps of:
performing control in a soft switching mode, in which the auxiliary switching element is turned on in a period from when the main switching element is turned off until the main switching element is turned on, in a period that appears at an intermediate point in each half-cycle of the AC power supply and during which the input current sensed by the current sensor has a prescribed value or more under at least a prescribed load; and
performing control in a hard switching mode, in which a switching operation of the main switching element is stopped and the auxiliary switching element is switched, in a period during which the input current has a prescribed value or less.
